Europäisches Patentamt

European Patent Office

Office européen des brevets

(11) Publication number: **0 092 954**
**B1**

# EUROPEAN PATENT SPECIFICATION

(45) Date of publication of patent specification: **08.10.86**

(51) Int. Cl.⁴: **H 04 N 3/20**

(21) Application number: **83302180.1**

(22) Date of filing: **18.04.83**

(54) Electron beam suppression circuit for a television display system.

(30) Priority: **23.04.82 GB 8211831**
**14.10.82 US 434315**

(43) Date of publication of application:
**02.11.83 Bulletin 83/44**

(45) Publication of the grant of the patent:
**08.10.86 Bulletin 86/41**

(84) Designated Contracting States:
**DE FR GB**

(56) References cited:
**AT-B- 268 394**
**DE-A-1 464 611**
**DE-A-1 920 134**
**DE-A-3 043 673**
**US-A-2 913 621**
**US-A-4 056 758**
**US-A-4 261 006**

**FUNKTECHNIK, vol. 30, no. 19/1975, München, Heidelberg, "EINE NEUE ULTRASCHALL-FERNBEDIENUNG FÜR FARBFERNSEHEMPFÄNGER", pages 600-611**

(73) Proprietor: **RCA CORPORATION**
**201 Washington Road**
**Princeton, NJ 08540 (US)**

(72) Inventor: **Haferl, Peter Eduard**
**Feldblumenstrasse 20**
**CH-8134 Adliswil (CH)**

(74) Representative: **Smith, Thomas Ian Macdonald et al**
**RCA International Limited Norfolk House**
**(1st Floor) 31 St. James Square**
**London SW1Y 4JR (GB)**

# Description

This invention relates to a circuit for rapidly suppressing the generation of an electron beam of the picture tube of a television display system when the display system is turned off.

The phosphor screen of the picture tube of a television receiver should be protected against the impinging of a continuous beam of electrons on the same region of the screen when horizontal and vertical sweep collapse after the television receiver is turned off. If the electron beam continuously impinges on the screen at the same spot, even for a relatively short period of time, the capability of the phosphor to fluoresce at that spot may be destroyed.

When the television receiver is in the normal operating mode, the electron beam is rapidly swept across the surface of the phosphor screen. Hence the electron beam does not impinge on any one location for any appreciable time, preventing damage to the screen from occurring.

When the television receiver is turned off, the scanning currents in the horizontal and vertical deflection windings may collapse before the energizing potential for the various electrodes of the picture tube decay sufficiently to prevent the generation and acceleration of an electron beam. Such a situation may be especially likely to exist in a remote control television receiver such as disclosed in our U.K. patent application No. 8302035 (Inventor P. E. Haferl) filed 25th January, 1983, and published 19th October, 1983 as GB—2118008A, being entitled TELEVISION RECEIVER STANDBY CIRCUIT. In such a remote controlled television receiver, the television receiver is placed in the standby mode of operation by directly disabling the horizontal deflection generator, thereby disabling most of the television receiver operating voltage supplies. By directly disabling the horizontal deflection generator to place the television receiver in the standy mode of operations, the horizontal scanning current rapidly decays to zero, quickly inhibiting normal horizontal sweep of the electron beam.

One solution to the problem of damage to the phosphor screen due to impingement by the electron beam when the deflection generator is disabled is shown in U.S. Patent 4056758, issued to Schaas on 1st November, 1977. Schaas applied a negative voltage to the control grid of a display tube whenever there is an absence of a trace voltage (such as during retrace). When the deflection generator is disabled, the trace voltage is discontinued, which causes suppression of the electron beam.

Experience has shown that the apparatus of Schaas is not a complete solution to the problem. Sometimes, the deflection circuit will ring after the deflection generator is disabled. Such ringing will cause the electron beam to turn back on, thus defeating the purpose of Schaas' apparatus, and damaging the phosphor screen.

AT—268394 discloses a protective circuit which disables both the deflection generator and the generator which provides the beam-generating operating voltage to the picture tube upon the occurrence of either excessive deflection current or excessive operating voltage. More particularly, AT—268394 discloses a circuit in which, responsive to a bi-state command signal the state of which is changed when such an excess condition occurs, a first switch is operated to disable normal generation of deflection current, and a second switch is operated to disable the operating voltage generator. However, following such disablement of the generator, it still takes some time for the operating voltages on the electrodes of the picture tube to dissipate and for the tube cathode to cool. As a result, the electron beam or beams can continue to be generated even after the deflection generator has been disabled. Therefore here again, there remains the possibility that the electron beam will continue to be generated after the beam deflection has been stopped, potentially leading to screen damage as previously explained.

According to the present invention, a command signal developed by a user-controlled switching means operates not only a first switch which disables normal generation of the deflection or scanning current, but also operates a second switch which is coupled to one of the tube electrodes for applying thereto a blocking potential which directly suppresses generation of the electron beam.

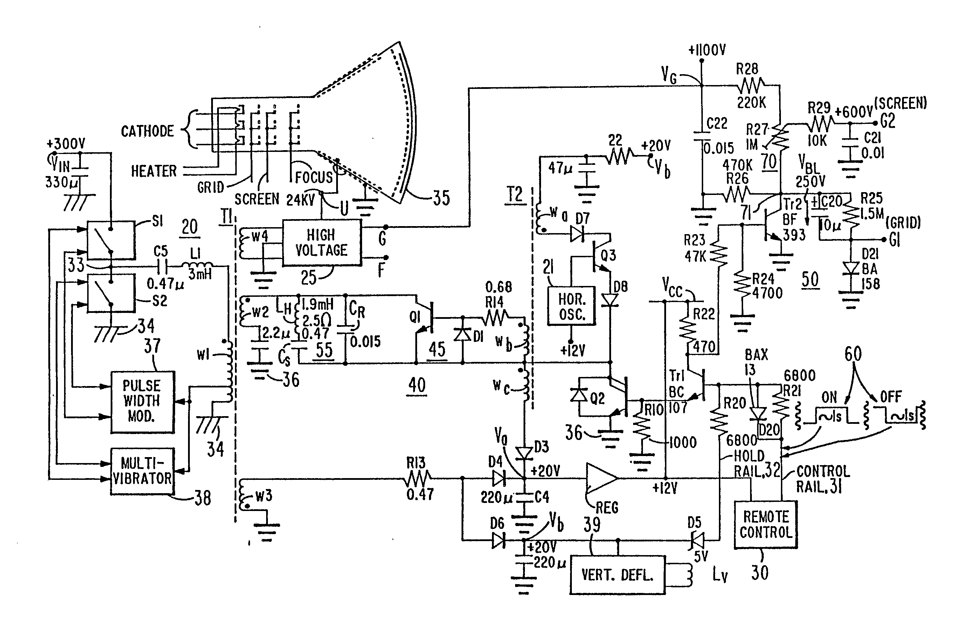

In the accompanying diagram the single FIGURE illustrates a remote controlled power supply and deflection circuit including an electron beam suppression circuit embodying the invention.

In the remote controlled power supply and deflection circuit for a television receiver, illustrated in the FIGURE, a switched mode power supply 20 is coupled to the primary winding w1 of a horizontal output transformer T1. A horizontal deflection generator 40 is coupled to a secondary winding w2 that is conductively isolated from primary winding w1. Switched mode power supply 20 comprises a push-pull converter arrangement such as the single conversion system (SICOS) power supply described in the aforementioned U.K. patent application.

Power supply 20 includes controllable, bi-directionally conductive switches S1 and S2 coupled together at an output terminal 33. Coupled between output terminal 33 and earth ground 34 is the series arrangement of a capacitor C5, an inductor L1 and primary winding w1 of horizontal output transformer T1. Switches S1 and S2 therefore form a push-pull arrangement with the aforementioned series arrangement.

During normal running operation, horizontal deflection generator 40 produces, during the horizontal retrace interval, a pulse voltage across secondary winding w2 that is transformer coupled to the magnetically tightly coupled winding w1. The pulse voltage appearing at a tap terminal of winding w1 is applied to a pulse width modulator control circuit 37 of the switched mode power supply 20. Modulator control circuit 37 pulse width modulates the switching of push-pull switches S1 and S2 so as to regulate the amplitude of the pulse voltages developed across the horizontal output transformer windings against variations in the unregulated input voltage $V_{in}$, and against loading variations produced by the load circuits coupled to the transformer.

At a controllable instant within each horizontal trace interval, switch S1 becomes conductive and energy is stored in the magnetic field of inductor L1 by current flowing from the source of input voltage $V_{in}$. At the beginning of the horizontal retrace interval, when horizontal trace switch 45 of horizontal deflection generator 40 becomes non-conductive, and when the deflection retrace circuit 55 is formed, switch S1 becomes non-conductive and switch S2 becomes conductive.

A transfer of energy is initiated from inductor L1 by way of flyback transformer T1 to the deflection retrace circuit 55 and to the retrace driven load circuits coupled to the flyback transformer, such as the ultor high voltage circuit 25 coupled to high voltage winding w4.

High voltage circuit 25, in addition to providing the ultor voltage at a terminal U for the final anode electrode of color picture tube 35, also provides energizing potentials for several of the other electrodes. At a terminal F, for example, a focus voltage is provided for energizing the focus electrodes of picture tube 35. At a terminal G, a DC voltage $V_G$ is provided for energizing, in a manner hereafter to be described, the screen and grid electrodes. The cathode electrodes and their heater elements are energized by conventional circuitry, not illustrated in the FIGURE.

With all the electrodes of picture tube 35 properly energized, electron beams are generated at the cathode electrodes and are accelerated to impinge on the phosphor screen display surface. As the electron beams travel within picture tube 35, they encounter the magnetic fields produced by the scanning currents flowing in the horizontal deflection winding $L_H$ and the vertical deflection winding $L_V$. These scanning currents are produced by horizontal deflection generator 40 and vertical deflection generator 39. The magnetic fields produced by the sawtooth horizontal and vertical scanning currents deflect the electron beams so as to produce a sweep of these beams in a raster pattern across the phosphor screen.

During the normal running mode of television receiver operation, a bi-directionally conductive, controllable switch Q2, comprising a Darlington transistor with an integrally formed anti-parallel diode, is maintained in continuous, saturated conduction. Switch Q2 provides a path to ground for horizontal deflection generator 40, enabling power to be transferred thereto from switching power supply 20 by way of windings w1 and w2 of horizontal output transformer T1. Switch Q2 also provides a path to ground for the current in horizontal driver transistor Q3 that is switched at a horizontal rate by a horizontal oscillator 21. The switching of transistor Q3 couples horizontal drive signals to horizontal output transistor Q1 of trace switch 45 by way of windings $w_a$ and $w_b$ of a horizontal driver transformer T2.

The voltage $V_a$ developed by trace rectification of the voltage across horizontal output transformer winding w3, reverse biases a diode D3 to prevent current from flowing in winding $w_c$ of horizontal driver transformer T2 during normal running mode of television receiver operation.

The voltage $V_a$ is applied to a regulator REG to develop a regulated collector supply voltage $V_{cc}$ (+12V) for a transistor Tr1. Transistor Tr1 is maintained in continuous conduction by current supplied along a hold rail 32, via a zener diode D5, from a source of voltage $V_b$. The voltage $V_b$ is derived by trace rectification of the voltage developed across horizontal output transformer winding w3.

To switch operation of the television receiver into the standby mode, a remote control circuit 30 generates the off-state of a command signal 60 on a control rail 31. The off-state command signal may, for example, be a one second negative going pulse that is applied to the base of transistor Tr1 through a resistor R21. Upon receipt of the off-state of the command signal, transistor Tr1 becomes cut off, cutting off conduction of the Darlington transistor Q2, thereby disconnecting horizontal deflection generator 40 from chassis ground 36.

The current in winding w2 of horizontal output transformer T1, when flowing out of the dotted terminal of the winding, can return to that winding only by flowing through winding $w_c$ of horizontal driver transformer T2, diode D3 and the $V_a$ voltage supply or loads coupled thereto. The current in winding $w_c$ induces a current in winding $w_b$ that forward biases horizontal output transistor Q1 to provide a direct path for current from winding w2 of horizontal output transformer T1 to winding $w_c$ of horizontal driver transformer T2.

Windings $w_b$ and $w_c$ form a regenerative arrangement to maintain horizontal output transistor Q1 forward biased for continuous, saturated conduction during standby. Thus during standby, a path for the bi-directional flow of current through trace switch 45 is provided. Trace switch 45 produces, in effect, a short circuit across horizontal deflection retrace capacitor $C_R$, disabling the operation of deflection retrace circuit 55 and disabling the generation of horizontal scanning current during standby.

With deflection retrace circuit 55 inoperative, the pulse voltage across winding w1 of transformer t1 is absent. Synchronized operation of pulse width modulator circuit 37 is disabled and a free running multivibrator 38, previously disabled by application thereto of the pulse voltage at the tap terminal of winding w1, is now enabled. Multivibrator 38 produces a high frequency switching of switches S1 and S2 at a fixed duty cycle and at a frequency approximating the horizontal deflection frequency. A high frequency, fixed duty cycle, substantially rectangular-wave voltage of reduced amplitude is developed across windings w1 and w2 during standby.

The switching voltage across winding w2 is applied by way of continuously conducting trace switch 45 to the top terminal of winding $w_c$ of horizontal driver transformer T2. During standby, the rectangular-wave voltage developed across winding $w_c$ is rectified by diode D3 to produce a standby voltage, $V_a$, from which is derived a +12V standby voltage. The +12V standby voltage powers remote control circuit 30 and horizontal oscillator 21. The +12V standby voltage is also used as the standby supply voltage $V_{cc}$ of transistor Tr1.

To switch operation of the television receiver back from standby to normal running mode of operation, the on-state of on-off command signal 60 is applied to the base of transistor Tr1 along control rail 31 for approximately one second to turn on both transistor Tr1 and controllable switch Q2. With the bottom terminal of horizontal deflection generator 40 now again connected to chassis ground 36, normal operation of horizontal deflection generator 40 and switching power supply 20 can resume.

To develop the steady state electrode voltages, for the screen and grid electrodes, the direct voltage, $V_G$, developed at terminal G of high voltage circuit 25 is applied to a voltage divider 70 comprising resistor R25—R28. A filter capacitor C22 is coupled between terminal G and chassis ground. The grid voltage terminal G1 is coupled to the junction of the bottom terminal of resistor R25 and the anode of a diode D21 that has its cathode coupled to chassis ground. The screen voltage terminal G2 is coupled through a resistor R29 to the wiper arm of resistor R27. A capacitor C21 is coupled between terminal G2 and chassis ground.

As mentioned previously, the television receiver is placed in the standby mode of operation by disabling horizontal deflection generator 40 when trace switch 45 short-circuits deflection retrace circuit 55. Horizontal scan is disabled almost immediately after receipt of the off-state of command signal 60, thereby inhibiting almost immediately the sweep of the electron beams. However, the cessation of electron emission from the cathodes of picture tube 35 and the collapse of the ultor voltage at terminal U may not occur as immediately.

To prevent spot burning of a small region of the phosphor screen by electrons emitted from the cathodes and accelerated to the phosphor screen before collapse of the ultor voltage, an electron beam suppression circuit 50 embodying the invention is coupled to the gride and screen electrodes and to the voltage supply terminal G.

As part of suppression circuit 50, a switching transistor Tr2 is coupled between chassis ground and the junction terminal of resistors R25—R27 of voltage divider 70. A capacitor C20 is coupled across resistor R25 of voltage divider 70. The base of switching transistor Tr2 is coupled to the collector of transistor Tr1.

The conduction state of switching transistor Tr2 is determined by the state of the remote on/off command signal 60 developed by remote control circuit 30. During normal running mode of television receiver operation, current from hold rail 32, biases transistor Tr1 into saturated conduction, removing base current from transistor Tr2, maintaining Tr2 in cutoff. Current from terminal G of high voltage circuit 25 flows through resistors R28, R27 and R25 to maintain diode D21 conducting and to maintain grid voltage terminal G1 grounded, as is required during normal mode operation. The voltage at the wiper arm of resistor R27 is coupled to the G2 terminal, developing at that terminal a voltage slightly greater than one-half the voltage $V_G$, also as is required during normal running operation.

Via diode D21, resistors R25 and R26 are parallel connected. Capacitor 20 is charged to the voltage $V_{BL}$ being developed across resistor R25.

When the off-state of the command signal is developed by remote control circuit 30, transistor Tr1 is cut off, enabling transistor Tr2 to become forward biased by the current flowing from the $V_{cc}$ supply through resistors R22 and R23. Junction terminal 71, at the top plate of capacitor C20, is now at chassis ground potential bringing the voltage at grid voltage terminal G1 to a negative voltage of magnitude equal to that of the voltage $V_{BL}$, the voltage being developed across capacitor C20. Diode D21 becomes reverse biased.

The conduction of transistor Tr1, therefore, disables the application of the energizing potential $V_G$ and in fact produces a negative voltage at grid electrode terminal G1. This negative voltage produces the cutoff or suppression of the generation of electron beams in picture tube 35. Spot burning of the phosphor screen is prevented.

The blocking potential $V_{BL}$ is quickly applied to grid electrode terminal G1 upon receipt of the off-state of command signal 60. Because of the turn off delay in Darlington switching transistor Q2, the disabling of horizontal deflection generator 40 is delayed until after the blocking potential $V_{BL}$ has been applied to grid electrode terminal G1. Thus, the suppressing of the generation of electron beams occurs prior to the disabling of the generation of scanning current.

The relatively long discharge time constant associated with capacitor C20 maintains the grid electrode in cutoff for a sufficiently long period that no beam spot appears even after elapse of the one second off-state of command signal 60.

At the same time that the blocking potential $V_{BL}$ is applied to terminal G1, the voltage at screen terminal G2 begins to decrease to a lower voltage level due to the grounding of terminal 71 by conduction of transistor Tr2. The discharge of capacitor C21 occurs at a rate determined by the time constant associated with capacitors C21 and C22 and resistors R27—R29.

During the entire standby interval, transistor Tr2 remains in saturation by the current flowing from the +12V standby supply. When the television receiver is again switched into the normal running mode of operation by receipt of the on-state of command signal 60, transistor Tr2 becomes cut off due to the conduction of transistor Tr1. Terminal G1 is again clamped to ground by the conduction of diode D21 after sufficient voltage $V_G$ is developed at terminal G.

The development of adequate voltage at screen terminal G2 is delayed significantly after receipt of the on-state of command signal 60 principally due to the delay in charging capacitor C20 through resistor R27. Such delay in obtaining adequate voltage at screen terminal G2 is desirable to ensure that no beam spot becomes visible if the television receiver be turned on while the cathode electrodes are still hot, and while a substantial ultor voltage still remains at terminal U. Such a situation may occur when the television receiver is rapidly cycled between standby and normal running modes of operation.

An additional feature of electron beam suppression circuit 50 embodying the invention is that short-circuit or overload conditions occurring at horizontal output transformer T1 activate the circuit. For example, under an overload condition, the pulse voltage across winding w3 changes sufficiently in characteristic such that the voltage $V_b$ decreases substantially, e.g. decreases below 7 volts, such that zener diode D5 becomes blocked. The hold current at hold rail 32 becomes zero, cutting off transistor Tr1. Transistor Tr2 is switched on, activating circuit 50 into suppressing generation of the electron beam.

The generation of the electron beam continues to be suppressed until the standby voltage $V_a$ decreases towards zero. The voltage $V_a$ decreases to zero more slowly than the other operating voltages because the voltage $V_a$ powers remote control circuit 30 and is therefor designed to be present during the transistion between normal running and standby modes of operation.

When the television receiver is disconnected from the mains supply that develops the input voltage $V_{in}$, electron beam suppression circuit 50 is activated in a manner similar to that previously described.

As an alternative arrangement, saving the use of a resistor, resistor R26 may be omitted, with terminal 71 being connected to the junction of R25, R27, C20 and the collector electrode of transistor Tr2. Resistor R25, in this alternative arrangement, is decreased to about one-third the value shown in the FIGURE, resulting in a smaller time constant being associated with capacitor C20.

## Claims

1. An electron beam suppression circuit for a television display system comprising a picture tube (35) having plurality of electrodes energisable to generate an electron beam that impinges on a display surface of said tube and a deflection generator (40) coupled to a deflection winding (LH) for generating scanning current therein to sweep said electron beam across said display surface; wherein said circuit includes

means (30) for developing a command signal (60) having first and second states; and

means including a first switch (Q2) coupled to said deflection generator (40) and responsive to said command signal for disabling normal generation of said scanning current to inhibit normal sweep of said electron beam upon the occurrence of the first state of said command signal;

characterized in that said command signal developing means comprises a user-controlled switching means, and that there is further provided

means, including a second switch (Tr2) responsive to said command signal and coupled to one of said electrodes (GRID), for applying thereto, upon the occurrence of said first state of said command signal, a blocking potential ($V_{BL}$) to suppress generation of said electron beam.

2. An electron beam suppression circuit according to Claim 1 characterized in that upon the occurrence of said first state of said command signal said first switch (Q2) changes conductive states after said second switch (Tr2) changes conductive states to suppress generation of said electron beam prior to disabling normal generation of said scanning current.

3. An electron beam suppression circuit according to Claim 1 wherein said deflection generator (40) includes a trace switch (Q1) coupled to said deflection winding ($L_H$) and operated at a deflection rate for generating said scanning current, and a retrace capacitance ($C_R$) coupled to said deflection winding ($L_H$) for forming therewith a retrace resonant circuit (55) during a retrace interval of a deflection cycle, characterized in that said normal scanning current generation disabling means includes means (D3) coupled to said first switch (Q2) for disabling said retrace resonant circuit (55) upon the occurrence of said first state of said command signal.

4. An electron beam suppression circuit according to claim 1 wherein said deflection generator (40) operates in a normal mode when said command signal is in said second state to produce a pulse voltage during a deflection cycle, characterized by means (W3) responsive to said pulse voltage and coupled to said first (Q2) and second (Tr2) switches for holding said two switches in given conductive states until the occurrence of said first state of command signal, upon which occurrence said command signal switches said two switches to other conductive states that will result in application of said blocking potential for the suppression of the generation of said electron beam, and in the disablement of the generation of said scanning current.

5. An electron beam suppression circuit according to Claim 4 characterized in that said holding means includes a power transformer (T1) coupled to a load circuit (25) of said television display system such that when said load circuit draws excessive current, said pulse voltage changes sufficiently in characteristic to disable said holding means, resulting in said first (Q2) and second (Tr2) switches changing to said other conductive states in this circumstance also.

6. An electron beam suppression circuit according to Claim 1 characterized by a voltage divider (70) coupled to said one electrode (GRID) and to said second switch (Tr2) with a source (25) of electrode energizing potential coupled to said voltage divider (70).

7. An electron beam suppression circuit according to Claim 6 characterized in that for developing said blocking potential, it comprises a capacitance (C20) coupled to said second switch (Tr2) and coupled between two terminals (71, G1) of said voltage divider (70).

8. An electron beam suppression circuit according to Claim 7 characterized in that a second one (SCREEN) of said plurality of electrodes is also coupled to said voltage divider (70).

**Patentansprüche**

1. Elektronenstrahlunterdrückungsschaltung für eine Fernsehwiedergabevorrichtung, welche eine Bildröhre (35) mit einer Mehrzahl von Elektroden, die zur Erzeugung eines auf eine Wiedergabefläche der Röhre auftreffenden Elektronenstrahls erregbar sind, und einen mit einer Ablenkwicklung (LH) gekoppelten Ablenkgenerator (40) zum Erzeugen eines den Elektronenstrahl über die Wiedergabefläche ablenkenden Ablenkstromes in der Ablenkwicklung enthält, mit

einer Anordnung (30) zum Erzeugen eines Kommando-Signals (60), welches einen ersten und einen zweiten Zustand aufweist, und

einer Anordnung, welche einen mit dem Ablenkgenerator (40) gekoppelten ersten Schalter (Q2) enthält, der auf das Kommando-Signal anspricht, um eine normale Erzeugung des Ablenkstromes und dadurch eine normale Ablenkung des Elektronenstrahls beim Auftreten des ersten Zustandes des Kommando-Signals zu verhindern, dadurch gekennzeichnet, daß die Anordnung zum Erzeugen des Kommandosignals eine benutzergesteuerte Schaltvorrichtung enthält und daß weiterhin

eine Anordnung vorgesehen ist, welche einen zweiten Schalter (Tr2) enthält, der auf das Kommando-Signal anspricht und mit einer der Elektroden (GRID) gekoppelt ist, um an diese beim Auftreten des ersten Zustandes des Kommando-Signals eine Sperrpotential (VBL) zur Unterdrückung der Erzeugung des Elektronenstrahls anzulegen.

2. Elektronenstrahlunterdrückungsschaltung nach Anspruch 1, dadurch gekennzeichnet, daß der erste Schalter (Q2) beim Auftreten des ersten Zustandes des Kommando-Signals die Leitungszustände wechselt, nachdem der zweite Schalter (Tr2) die Leitungszustände gewechselt hat, um die Erzeugung des Elektronenstrahls zu unterbrechen, bevor die normale Erzeugung des Ablenkstromes verhindert wird.

3. Elektronenstrahlunterdrückungsschaltung nach Anspruch 1, bei welchem der Ablenkgenerator (40) einen Hinlaufschalter (Q1), der mit der Ablenkwicklung (LH) gekoppelt ist und mit einer Ablenkrate zum Erzeugen des Ablenkstromes arbeitet, sowie eine Rücklaufkapazität (CR), die mit der Ablenkwicklung (LH) gekoppelt ist, um mit dieser während eines Rücklaufintervalles eines Ablenkzyklus einen Rücklauf-Resonanzkreis (55) zu bilden, enthält, dadurch gekennzeichnet, daß die Anordnung zum Verhindern der normalen Erzeugung des Ablenkstromes eine mit dem ersten Schalter (Q2) gekoppelte Vorrichtung (D3) zum Außerbetriebsetzen des Rücklauf-Resonanzkreises (55) beim Auftreten des ersten Zustandes des Kommando-Signals enthält.

4. Elektronenstrahlunterdrückungsschaltung nach Anspruch 1, dadurch gekennzeichnet, daß der Ablenkgenerator (40) in einem normalen Betriebszustand arbeitet, wenn sich das Kommando-Signal im zweiten Zustand befindet, um während eines Ablenkzyklus eine Impulsspannung zu erzeugen, gekennzeichnet durch eine Anordnung (W3), die auf die Impulsspannung anspricht und mit dem ersten (Q2) und dem zweiten (Tr2) Schalter gekoppelt ist, um diese beiden Schalter in einem vorgegebenen Leitungszustand zu halten, bis der erste Zustand des Kommando-Signals auftritt, bei dessen Auftreten das Kommando-Signal die beiden Schhalter in die anderen Leitungszustände schaltet, was das Anlegenn des Sperrpotentials für die Unterdrükkung der Erzeugung des Elektronenstrahls und das Verhindern der Erzeugung des Ablenkstromes zur Folge hat.

5. Elektronenstrahlunterdrückungsschaltung nach Anspruch 4, dadurch gekennzeichnet, daß die Halteanordnung einen Leistungstransformator (T1) enthält, der mit einer Lastschaltung (25) der Fernsehwiedergabevorrichtung so gekoppelt ist, daß sich die Impulsspannung bei übermäßiger Stromaufnahme der Lastschaltung in ihren Eigenschaften genügend ändert, um die Halteanordnung außer Beitrieb zu setzen, so daß auch unter diesen Umständen ein Übergang des Ersten (Q2) und des zweiten (Tr2) Schalters in die anderen Leitungszustände resultiert.

6. Elektronenstrahlunterdrückungsschaltung nach Anspruch 1, gekennzeichnet durch einen Spannungsteiler (70), der mit der einen Elektrode (GRID) und dem zweiten Schalter (Tr2) gekoppelt ist, und mit einer Quelle (25) für ein Elektrodenerregungspotential, die mit dem Spannungsteiler (70) gekoppelt ist.

7. · Elektronenstrahlunterdrückungsschaltung nach Anspruch 6, dadurch gekennzeichnet, daß sie zur Erzeugung des Sperrpotentials eine Kapazität (C20) enthält, die mit dem zweiten Schalter (Tr2) sowie zwischen zwei Anschlüsse (71, G1) des Spannungsteilers (70) gekoppelt ist.

8. Elektronenstrahlunterdrückungsschaltung nach Anspruch 7, dadurch gekennzeichnet, daß eine zweite (SCREEN) der Mehrzahl von Elektroden ebenfalls mit dem Spannungsteiler (70) gekoppelt ist.

## Revendications

1. Circuit de suppression d'un faisceau d'électrons pour un système dde visualisation de télévision comprenant un tube-image (35) ayant un certain nombre d'électrodes pouvant être excitées pour produire un faisceau d'électrons qui fait impact sur une surface de visualisation dudit tube et un générateur de déviation (40) relié à un enroulement déflecteur (LH) pour y produire un courant de balayage pour forcer ledit faisceau d'électrons à balayer ladite surface de visualisation; où ledit circuit comprend

un moyen (30) pour développer un signal de commande (60) ayant des premier et second états; et

un moyen comprenant un premier commutateur (Q2) relié audit générateur de déviation (40) et répondant audit signal de commande pour inhiber la production normale dudit courant de balayage pour inhiber un balayage normal dudit faisceau d'électrons à la présence du premier état dudit signal de commande;

caractérisé en ce que ledit moyen développant un signal de commande comprend un moyen de commutation commandé par l'utilisateur et en ce qu'on prévoit de plus

un moyen, comprenant un second commutateur (Tr2) répondant audit signal de commande et relié à l'une desdites électrodes (GRILLE) pour lui appliquer, à la présence dudit premier état dudit signal de commande, un potentiel de blocage (V$_{BL}$) pour supprimer la production dudit faisceau d'électrons.

2. Circuit de suppression d'un faisceau d'électrons selon la revendication 1 caractérisé en ce qu'à la présence dudit premier état dudit signal de commande, ledit premier commutateur (Q2) change d'états de conduction après que ledit second commutateur (Tr2) a changé d'états de conduction pour supprimer la production dudit faisceau d'électrons avant inhibition de la production normale dudit courant de balayage.

3. Circuit de suppression d'un faisceau d'électrons selon la revendication 1 où ledit générateur de déviation (40) comprend un commutateur d'aller (Q1) relié audit enroulement déflecteur (L$_H$) et fonctionnant à fréquence de déviation pour produire ledit courant de balayage, et une capacité de retour (C$_R$) reliée audit enroulement déflecteur (L$_H$) pour former avec lui un circuit résonant de retour (55) pendant un intervalle de retour d'un cycle de déviation caractérisé en ce que ledit moyen inhibant la production du courant normal de balayage comprend un moyen (D3) relié audit commutateur (Q2) pour inhiber ledit circuit résonant de retour (55) à la présence dudit premier état dudit signal de commande.

4. Circuit de suppression d'un faisceau d'électrons selon la revendication 1 où ledit générateur de déviation (40) fonctionne en mode normal lorsque ledit signal de commande est dans ledit second état pour produire une tension impulsionnelle pendant un cycle de déviation, caractérisé par un moyen (W3) répondant á ladite tension impulsionnelle et relié auxdits premier (Q2) et second (Tr2) commutateurs pour maintenir lesdits deux commutateurs à des états conducteurs donnés jusqu'à la présence dudit premier état du signal de commande, présence lors de laquelle ledit signal de commande commute lesdits deux commutateurs à d'autres états conducteurs qui auront pour résultat l'application dudit potentiel de blocage pour la suppression de la production dudit faisceau d'électrons et l'inhibition de la production dudit courant de balayage.

5. Circuit de suppression d'un faisceau d'électrons selon la revendication 4 caractérisé en ce ledit moyen de maintien comprend un transformateur de puissance (T1) relié à un circuit de charge (25) dudit système de visualisaton de télévision de façon que lorsque ledit circuit de charge tire un courant excessif, ladite tension impulsionnelle change suffisamment de caractéristique pour inhiber ledit moyen de maintien, avec pour résultat que lesdits premier (Q2) et second (Tr2) commutateurs passent également aux autres états conducteurs dans cette circonstance.

6. Circuit de suppression d'un faisceau d'électrons selon la revendication 1 caractérisé par un diviseur de tension (70) relié à ladite électrode (GRILLE) et audit second commutateur (Tr2) avec une source (25) de potentiel d'excitation d'électrode reliée audit diviseur de tension (70).

7. Circuit de suppression d'un faisceau d'électrons selon la revendication 6 caractérisé en ce que pour développer ledit potentiel de blocage, il comprend une capacité (C20) reliée audit second commutateur (Tr2) et reliée entre deux bornes (71, G1) dudit diviseur de tension (70).

8. Circuit de suppression d'un faisceau d'électrons selon la revendication 7 caractérisé en ce qu'une seconde (ECRAN) desdites électrodes est également reliée audit diviseur de tension (70).